(19) **Europäisches Patentamt / European Patent Office / Office européen des brevets**

(11) **EP 4 431 935 A1**

(12) # EUROPEAN PATENT APPLICATION
published in accordance with Art. 153(4) EPC

(43) Date of publication:
**18.09.2024 Bulletin 2024/38**

(21) Application number: **22892651.5**

(22) Date of filing: **31.10.2022**

(51) International Patent Classification (IPC):
*G01N 29/024* (2006.01)

(52) Cooperative Patent Classification (CPC):
**G01N 29/024**

(86) International application number:
**PCT/JP2022/040655**

(87) International publication number:
**WO 2023/085152 (19.05.2023 Gazette 2023/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.11.2021 JP 2021184738**

(71) Applicants:
- **Nisshinbo Holdings Inc.**
  **Tokyo 103-8650 (JP)**
- **Japan Radio Co., Ltd.**
  **Mitaka-shi, Tokyo 181-0002 (JP)**
- **Ueda Japan Radio Co., Ltd.**
  **Ueda-shi, Nagano 386-8608 (JP)**

(72) Inventors:
- **SHINFUKU Yoshifumi**
  **Mitaka-shi, Tokyo 181-0002 (JP)**
- **ITO Isao**
  **Ueda-shi, Nagano 386-8608 (JP)**

(74) Representative: **Wunderlich & Heim**
  **Patentanwälte**
  **PartG mbB**
  **Irmgardstraße 3**
  **81479 München (DE)**

(54) **GAS CONCENTRATION MEASUREMENT DEVICE**

(57) An objective of the present invention is to accurately measure the concentration of the gas. A gas concentration measurement device (100) comprises: a transmission unit (14) which transmits ultrasonic waves to a concentration measurement space (22); a reception unit (16) which receives the ultrasonic waves propagated through the concentration measurement space (22) and outputs a reception signal; and a concentration measurement unit (48) which determines the spatial propagation time during which the ultrasonic waves propagate through the concentration measurement space (22) and determines the concentration of the gas on the basis of the spatial propagation time. The concentration measurement unit (48) comprises a first memory (60) and a second memory (62), and a time shift filter (64) which applies a time shift process. The concentration measurement unit (18) determines the degree of approximation between a reception signal read from the second memory (62) and a time shift signal read from the first memory (60) and to which the time shift process has been applied, determines the time difference of pulses of neighboring reception signals on the time axis on the basis of the degree of approximation to the minimum shift time in the time shift process, and determines the spatial propagation time on the basis of this time difference.

FIG. 4

**Description**

TECHNICAL FIELD

The present disclosure relates to a gas concentration measurement apparatus, and in particular to measurement of propagation time of an ultrasound.

BACKGROUND

Research and development has been carried out widely for fuel cell vehicles which travel with electric power supplied from a fuel cell. A fuel cell generates electric power as a result of a chemical reaction between hydrogen and oxygen. In general, hydrogen is supplied to the fuel cell as a fuel, and oxygen is taken into the fuel cell from surrounding air. The fuel cell vehicle is equipped with a hydrogen tank, and hydrogen is supplied from the hydrogen tank to the fuel cell. When an amount of hydrogen in the hydrogen tank becomes low, hydrogen is supplied from a hydrogen supply apparatus provided in a service station to the hydrogen tank of the fuel cell vehicle.

Because hydrogen is a combustible gas, it is necessary to monitor for leakage of hydrogen from the fuel cell vehicle and the hydrogen supply apparatus. For this purpose, a hydrogen concentration measurement apparatus is widely in use with the fuel cell vehicle and the hydrogen supply apparatus. The hydrogen concentration measurement apparatus has functions such as measuring concentration of hydrogen contained in air, or sending an alert when the hydrogen concentration becomes greater than a predetermined value.

Patent Literature 1 discloses an apparatus which measures concentration of a particular gas. This apparatus measures the concentration of the particular gas based on a propagation velocity of ultrasound in air which is the measurement target. A propagation time from transmission of the ultrasound from a transmitter to reception, by a receiver, of the ultrasound that has propagated through a measurement section within the concentration measurement space is measured, a propagation velocity is measured based on the propagation time, and the concentration of the gas is then measured.

Patent Literature 2 discloses a gas concentration sensor which transmits ultrasound to a measurement chamber, receives a reflected wave that has been reflected by a wall surface of the measurement chamber, determines a propagation time, which is a time of propagation of the ultrasound through the measurement chamber, and determines a propagation velocity, to thereby detect a concentration of gas to be measured. Patent Literature 2 discloses that the propagation time is determined based on a difference between a time of reception of a first reflected wave which is received by an ultrasound element at an earlier time and a time of reception of a second reflected wave which is received by the ultrasound element at a later time.

CITATION LIST

PATENT LITERATURE

Patent Literature 1: JP 2018-100916 A
Patent Literature 2: JP 2000-249691 A

SUMMARY

TECHNICAL PROBLEM

When the time of propagation of the ultrasound in the measurement chamber is determined based on a time (timing) of reception of the ultrasound by an ultrasound element, the following problem may occur. Specifically, when a reception signal which is output from the ultrasound element is digitally sampled, it becomes impossible to determine the propagation time at a time shorter than the sampling period, and there may be cases in which sufficient measurement precision cannot be obtained for the gas concentration.

An advantage of the present disclosure lies in accurately performing measurement of the concentration of the gas.

SOLUTION TO PROBLEM

According to one aspect of the present disclosure, there is provided a gas concentration measurement apparatus comprising: a concentration measurement space in which a concentration of a gas is measured; a transmitter that transmits ultrasound to the concentration measurement space in response to a transmission pulse signal; a receiver that receives ultrasound that has propagated through the concentration measurement space, and that outputs a reception signal; and an analyzer that determines a space propagation time, which is a time of propagation of the ultrasound through the concentration measurement space, based on points in time at which a plurality of pulses of the reception signal are output from the receiver, and that determines a concentration of a gas which is a measurement target based on the space propagation time, wherein the analyzer comprises: a first memory and a second memory which store the reception signal; a time shift filter which applies a time shift process on the reception signal which is stored in the first memory; and a control calculator which determines the space propagation time, the analyzer determining a proximity between the reception signal which is read from the second memory and a time shifted signal obtained by reading the reception signal from the first memory and applying the time shift process thereto, and the analyzer determining a time difference between pulses of the reception signal that are adjacent to each other on the time axis, based on a minute shift time in the time shift process and the proximity, and determines the space propagation time based on the time difference.

Desirably, the analyzer comprises a sampling period shifter which applies, to the reception signal which is read from the second memory, a sampling period shift process in which a signal is shifted on the time axis in units of a sampling period, and the analyzer determines a proximity between the reception signal to which the sampling period shift process is applied, and the time shifted signal.

Desirably, the minute shift time in the time shift process is shorter than the sampling period.

Desirably, the calculator searches for the minute shift time which results in a highest degree of proximity indicated by the proximity, and determines the time difference based on the minute shift time resulting in the highest degree of proximity indicated by the proximity.

Desirably, the proximity is Euclid distance between the reception signal which is read from the second memory, and the time shifted signal.

Desirably, the proximity is a correlation value between the reception signal which is read from the second memory, and the time shifted signal.

Desirably, the time shift filter is an FIR filter.

ADVANTAGEOUS EFFECTS

According to an aspect of the present disclosure, the gas concentration can be accurately measured.

BRIEF DESCRIPTION OF DRAWINGS

FIG. 1 is a diagram showing a structure of a gas concentration measurement apparatus according to an embodiment of the present disclosure.
FIG. 2 is a diagram schematically showing a time waveform of a reception pulse.
FIG. 3 is a diagram showing a specific structure of the gas concentration measurement apparatus.
FIG. 4 is a diagram showing a specific structure of a gas concentration measurement unit.

DESCRIPTION OF EMBODIMENTS

An embodiment of the present disclosure will now be described with reference to the drawings. The same constituent elements shown in a plurality of drawings are assigned the same reference numerals, and will only be briefly described.

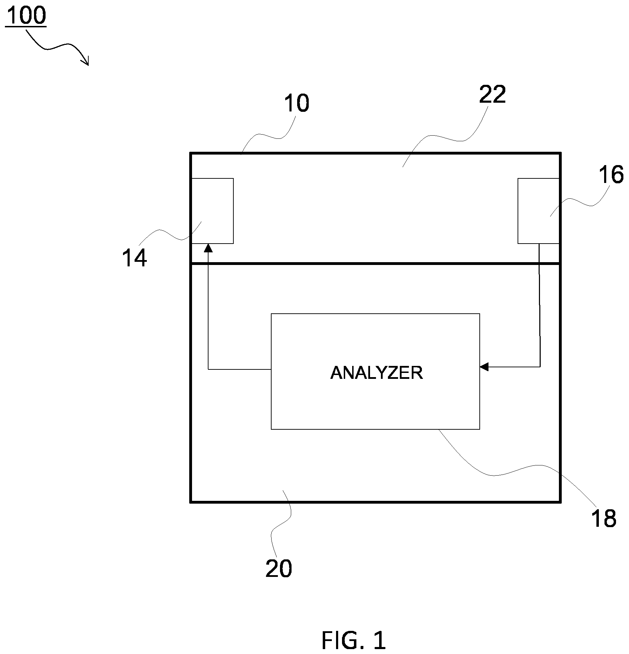

FIG. 1 shows a structure of a gas concentration measurement apparatus 100 according to an embodiment of the present disclosure. The gas concentration measurement apparatus 100 includes a housing 10, a transmitter 14, a receiver 16, and an analyzer 18. The housing 10 forms an analyzer housing space 20 and a concentration measurement space 22. The concentration measurement space 22 is a space having a tubular shape with respective ends blocked. The transmitter 14 is placed at one end of the concentration measurement space 22, and the receiver 16 is placed at the other end.

The analyzer 18 is housed in the analyzer housing space 20. The analyzer 18 may be formed from an electronic circuit, which may be fixed in the analyzer housing space 20, in a state of being fixed on a substrate.

Each of the transmitter 14 and the receiver 16 has an ultrasound transducer. The transmitter 14 and the receiver 16 are connected to the analyzer 18. The transmitter 14 transmits ultrasound to the concentration measurement space 22 in accordance with control by the analyzer 18. That is, the analyzer 18 outputs a transmission pulse signal, which is an electric signal, to the transmitter 14. The transmitter 14 converts the transmission pulse signal to ultrasound, and transmits the ultrasound. The receiver 16 receives ultrasound that has propagated through the concentration measurement space 22. The receiver 16 converts the received ultrasound to a reception signal, which is an electric signal, and outputs the reception signal to the analyzer 18.

The analyzer 18 determines a space propagation time which is a time of propagation of the ultrasound through the concentration measurement space 22, based on a point in time of output of a plurality of pulses of the reception signal from the receiver 16, and determines a concentration of a gas, which is a measurement target, based on the space propagation time.

The analyzer 18 measures a space propagation time required for ultrasound to propagate from one end to the other end of the concentration measurement space 22 through a process described below. After the analyzer 18 outputs the transmission pulse signal to the transmitter 14, the analyzer 18 determines a time difference of pulses of the reception signal that are adjacent to each other on the time axis, and determines the space propagation time based on the time difference. That is, the analyzer 18 determines the space propagation time based on a difference (time difference) between a first point in time of reception at which a pulse of the reception signal (reception pulse) is output from the receiver 16 a first time, and a second point in time of reception at which the reception pulse is output from the receiver 16 a second time.

The reception pulse which is output from the receiver 16 the first time corresponds to a direct ultrasound which is received by the receiver 16 a first time. The direct ultrasound is ultrasound which is transmitted from the transmitter 14, propagates from the one end to the other end through the concentration measurement space 22, and is received by the receiver 16. The reception pulse which is output from the receiver 16 the second time corresponds to reflected ultrasound which propagates through the concentration measurement space 22 for one and a half round trips after being transmitted from the transmitter 14, and is received by the receiver 16. The reflected ultrasound is ultrasound which is transmitted from the transmitter 14, propagates from the one end to the other end through the concentration measurement space 22, is reflected at the other end, propagates from the other end to the one end through the concentration measurement space 22, is reflected at the one end, propagates through the concentration measurement space 22, and is received by the receiver 16.

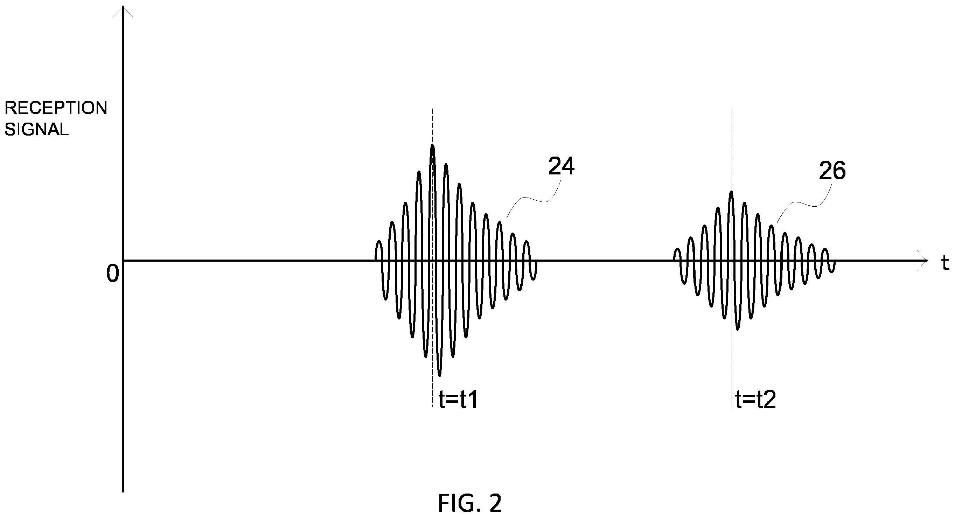

FIG. 2 schematically shows a time waveform of the reception pulse which is output from the receiver 16. At time t=0, the transmission pulse signal is output from the analyzer 18 to the transmitter 14. The reception signal which is output from the receiver 16 to the analyzer 18 includes a reception pulse having a time waveform of a sine wave shape to which amplitude modulation is applied in a pulse form. The reception pulse which is output from the receiver 16 the first time (a direct wave reception pulse 24) has the maximum absolute value of a wave height at time t=t1. The reception pulse which is output from the receiver 16 the second time (a reflected wave reception pulse 26) has the maximum absolute value of the wave height at time t=t2, which is later than the time t=t1. The analyzer 18 determines the time difference corresponding to a time obtained by subtracting the time t1 from the time t2 with the following structure and process, and determines the concentration of the gas which is the measurement target based on the time difference.

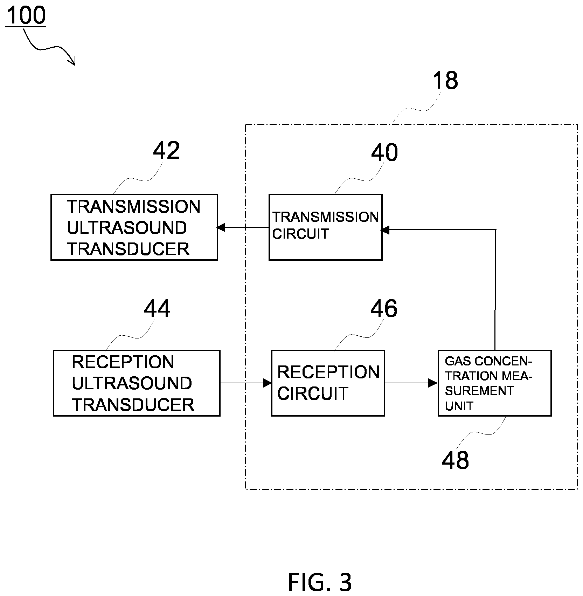

FIG. 3 shows a specific structure of the gas concentration measurement apparatus 100. The gas concentration measurement apparatus 100 comprises a transmission ultrasound transducer 42 included in the transmitter 14, a reception ultrasound transducer 44 included in the receiver 16, and the analyzer 18. The analyzer 18 comprises a transmission circuit 40, a reception circuit 46, and a gas concentration measurement unit 48.

The gas concentration measurement unit 48 controls the transmission circuit 40 to cause the transmission circuit 40 to output a transmission pulse signal. In response to the control of the gas concentration measurement unit 48, the transmission circuit 40 outputs the transmission pulse signal to the transmission ultrasound transducer 42. The reception ultrasound transducer 44 converts the ultrasound that has propagated through the concentration measurement space 22 into a reception signal which is an electric signal, and outputs the reception signal to the reception circuit 46. The reception circuit 46 discretizes the reception signal with a predetermined sampling period to convert the reception signal into a digital signal, and outputs the digital signal to the gas concentration measurement unit 48.

The gas concentration measurement unit 48 stores the reception signal, and executes the following process to determine the space propagation time. Specifically, the gas concentration measurement unit 48 determines a proximity between a pulse obtained by provisionally advancing the reflected wave reception pulse by a shift time $\tau$, and the direct wave reception pulse. Here, the proximity is a value showing a degree of closeness of two signals, and may be, for example, Euclid distance between the two signals. The Euclid distance is defined as a square root of a value obtained by integrating a square of a difference between two signals over time. When the Euclid distance is determined, for example, the magnitude(s) of one signal or both signals may be adjusted so that the maximum values of the two signals are equal to each other. The gas concentration measurement unit 48 determines a shift time $\tau$ which results in the highest degree of proximity indicated by the proximity as the space propagation time.

A concentration calculation formula (Formula (1)) is widely known, which represents a relationship between a propagation velocity of the ultrasound and the concentration of a particular gas contained in the gas through which the ultrasound propagates. The analyzer 18 uses the concentration calculation formula (Formula (1)) or a formula having the same meaning, to determine the concentration of the gas from the space propagation time T and a length L of the concentration measurement space 22.

[Formula (1)]

$$p = \frac{1}{M_h - M_a}\left(kRT_{mp}\Big/(L/T)^2 - M_a\right)$$

Here, k represents a specific-heat ratio of the gas, R represents the gas constant, and $T_{mp}$ represents a temperature of the concentration measurement space 22. $M_h$ represents a molecular weight of the gas which is the measurement target, and $M_a$ represents a molecular weight of air excluding the measurement target gas. When the composition of the air is assumed to be only 80% nitrogen and 20% oxygen, the specific-heat ratio k may be taken to be 1.4. The gas constant R is 8.31, and the molecular weight $M_a$ of the air is 28.8. When the measurement target gas is hydrogen, the molecular weight $M_h$ is 2.0. The term L/T in (Formula (1)) represents the propagation velocity of the ultrasound.

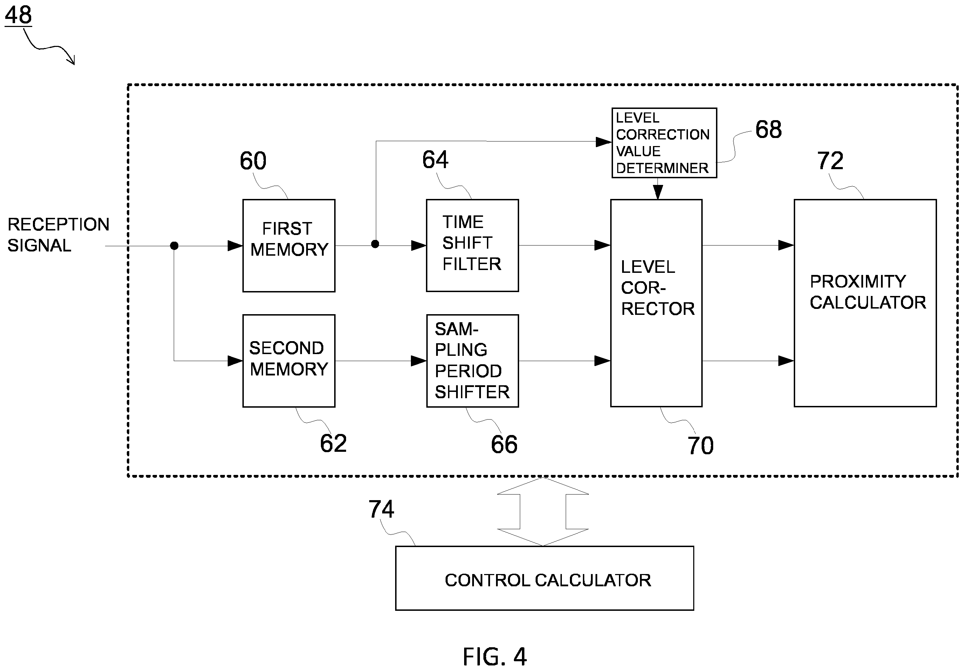

FIG. 4 shows a specific structure of the gas concentration measurement unit 48. The gas concentration measurement unit 48 comprises a first memory 60, a second memory 62, a time shift filter 64, a sampling period shifter 66, a level correction value determiner 68, a level corrector 70, a proximity calculator 72, and a control calculator 74. The gas concentration measurement unit 48 may be formed from a processor. By executing a program, the processor implements the constituent elements (the time shift filter 64, the sampling period shifter 66, the level correction value determiner 68, the level corrector 70, the proximity calculator 72, and the control calculator 74).

The first memory 60 and the second memory 62 may be formed from separate hardware, or from a single item of hardware. When the first memory 60 and the second memory 62 are formed from a single item of hardware, the first memory 60 and the second memory 62 may be formed by storing or deleting information to and from the same storage region in a time divided manner.

An overview of operations of the gas concentration measurement unit 48 will now be described. The first memory 60 and the second memory 62 store the same reception signal. The sampling period shifter 66 reads the reception signal from the second memory 62. The sampling period shifter 66 applies a sampling period shift process to the reception signal which is read from the second memory 62. The sampling period shift process is a process in which the signal is shifted on the time axis in units of the sampling period.

That is, the sampling period shifter 66 reads the reception signal from the second memory 62, shifts the reception signal on the time axis with a sampling period shift time which is set by the control calculator 74, and outputs the shifted signal to the level corrector 70. The sampling period shift time is time having the sampling period of the reception signal as one unit, and is represented as an integer multiple of the sampling period. The process to shift the reception signal on the time axis may be executed by shifting an address of the reception signal which is stored in the second memory 62, and reading the reception signal. In this case, the second memory 62 stores each of the discretized values of the reception signal in correspondence with an address so that the value thereof increases in time sequential order. The sampling period shifter 66 increases or decreases the value of the address designated when the reception signal is read, by a value corresponding to the sampling period shift time, to execute a process equivalent to shifting the reception signal on the time axis.

The time shift filter 64 may be formed from a digital filter such as an FIR filter (Finite Impulse Response filter) having the characteristic determined by a plurality of tap coefficients (group of tap coefficients). The time shift filter 64 reads the reception signal from the first memory 60, applies the time shift process to the reception signal according to the group of tap coefficients which are set by the control calculator 74, to generate a time shifted signal, and outputs the time shifted signal to the level corrector 70. The time shift process is a process to shift the signal to be processed on the time axis by a minute shift time determined by the group of tap coefficients. In the present embodiment, the minute shift time is shorter than the sampling period.

The level corrector 70 adjust a level of the reception signal which is output from the time shift filter 64 (time shifted signal) and a level of the reception signal which is output from the sampling period shifter 66, based on a correction coefficient which is output from the level correction value determiner 68. A process for the level correction value determiner 68 to determine the correction coefficient will be described later.

The proximity calculator 72 determines a proximity indicating a degree of proximity between the reception signal which is output from the time shift filter 64 and for which the level is corrected by the level corrector 70 (level-corrected, time shifted signal), and the reception signal which is output from the sampling period shifter 66 and for which the level is corrected by the level corrector 70. The control calculator 74 acquires the proximity while changing the sampling period shift time in the sampling period shifter 66 and the minute shift time in the time shift filter 64. The control calculator 74 determines a time difference between the first point in time of reception and the second point in time of reception as the space propagation time, based on a sampling period shift time and a minute shift time which result in the highest degree of proximity indicated by the proximity. The control calculator 74 calculates the gas concentration using the space propagation time and according to (Formula 1).

Next, details of the structure and the process for the gas concentration measurement unit 48 to determine the space propagation time will be described. The level correction value determiner 68 reads the reception signal which is stored in the first memory 60, and determines a direct wave level correction value that standardizes the wave height of an absolute value of the direct wave reception pulse. The direct wave level correction value is a value by which the direct weave reception pulse is multiplied so that the direct wave reception pulse varies within a predefined range. Further, the level correction value determiner 68 determines a reflected wave level correction value for the reflected wave reception pulse. The reflected wave level correction value is a value by which the reflected wave reception pulse is multiplied so that the reflected wave reception pulse varies within a range identical to that for the direct wave reception pulse after the level correction.

Next, a basic shift process is executed. In the basic shift process, the group of tap coefficients is set for the time shift filter 64 so that the minute shift time in the time shift filter 64 becomes 0. The direct wave reception pulse included in the reception signal is read from the first memory 60 into the time shift filter 64. The time shift filter 64 applies the time shift process having the minute shift time of 0 to the direct wave reception pulse, and outputs the resulting pulse to the level corrector 70. The level corrector 70 multiplies the direct wave reception pulse (time shifted signal) by the direct wave level correction value, and outputs the resulting pulse to the proximity calculator 72.

The reflected wave reception pulse included in the reception signal is read from the second memory 62 into the sampling period shifter 66. The sampling period shifter 66 shifts the reflected wave pulse on the time axis by the sampling period shift time which is set by the control calculator 74, and outputs the resulting pulse to the level corrector 70. The level corrector 70 multiplies the reflected wave reception pulse by the reflected wave level correction value, and outputs the resulting pulse to the proximity calculator 72.

The proximity calculator 72 determines the Euclid distance between the direct wave reception pulse and the reflected wave reception pulse as the proximity. That is, the proximity calculator 72 determines the Euclid distance, which is a square root of a value obtained by integrating a square of a value, obtained by subtracting the reflected wave reception pulse from the direct wave reception pulse, over time. A smaller value of the Euclid distance means a larger degree of proximity between the direct wave reception pulse and the reflected wave reception pulse.

The control calculator 74 acquires the Euclid distance from the proximity calculator 72 while changing the sampling period shift time, and searches for a sampling period shift time which results in the minimum Euclid distance. The control calculator 74 determines the sampling period shift time resulting in the minimum Euclid distance as a coarse space propagation time.

After the coarse space propagation time is determined, a fine adjustment shift process is executed. In the fine adjustment shift process, the sampling period shift time in the sampling period shifter 66 is fixed at the coarse space propagation time. The direct wave reception pulse included in the reception signal is read from the first memory 60 into the time shift filter 64. The time shift filter 64 applies the time shift process to the direct wave reception pulse according to the minute shift time determined by the group of tap coefficients supplied from the control calculator 74, and outputs the resulting pulse to the level corrector 70. The level corrector 70 multiplies the direct wave reception pulse by the direct wave level correction value, and outputs the resulting pulse to the proximity calculator 72.

The reflected wave reception pulse included in the reception signal is read from the second memory 62 into the sampling period shifter 66. The sampling period shifter 66 shifts the reflected wave pulse on the time axis by the coarse space propagation time, and outputs the resulting pulse to the level corrector 70. The level corrector 70 multiplies the reflected wave reception pulse by the reflected wave level correction value, and outputs the resulting pulse to the proximity calculator 72. The proximity calculator 72 determines the Euclid distance between the direct wave reception pulse and the reflected wave reception pulse.

The control calculator 74 acquires the Euclid distance from the proximity calculator 72 while changing the minute shift time by changing the group of tap coefficient filters, and searches for the minute shift time which results in the minimum Euclid distance. The control calculator 74 determines a time obtained by adding the minute shift time resulting in the minimum Euclid distance (adjusted minute shift time) and the coarse space propagation time as a final space propagation time.

According to such a structure and process, the space propagation time is determined with a resolution that is higher than the sampling period. With this configuration, the measurement precision of the gas concentration is improved.

In the above, an embodiment is described in which the Euclid distance is used as the proximity between two signals. Alternatively, a correlation value of the two signals may be used as the proximity. The correlation value is defined as a value obtained by integrating a product of two signals over time. When the correlation value is used as the proximity, the condition of the highest degree of proximity indicated by the proximity is equivalent to a condition of the maximum correlation value. In addition, the above-described condition of the minimum Euclid distance would be replaced with a condition of the maximum correlation value. When the correlation value is used as the proximity, the level correction by the level corrector 70 does not need to be executed.

REFERENCE SIGNS LIST

10 housing, 14 transmitter, 16 receiver, 18 analyzer, 20 analyzer housing space, 22 concentration measurement space, 24 direct wave reception pulse, 26 reflected wave reception pulse, 40 transmission circuit, 42 transmission ultrasound transducer, 44 reception ultrasound transducer, 46 reception circuit, 48 gas concentration measurement unit, 60 first memory, 62 second memory, 64 time shift filter, 66 sampling period shifter, 68 level correction value determiner, 70 level corrector, 72 proximity calculator, 74 control calculator.

**Claims**

1. A gas concentration measurement apparatus comprising:

   a concentration measurement space in which a concentration of a gas is measured;
   a transmitter that transmits ultrasound to the concentration measurement space in response to a transmission pulse signal;
   a receiver that receives ultrasound that has propagated through the concentration measurement space, and that outputs a reception signal; and
   an analyzer that determines a space propagation time, which is a time of propagation of the ultrasound through the concentration measurement space, based on points in time at which a plurality of pulses of the reception signal are output from the receiver, and that determines a concentration of a gas which is a measurement target based on the space propagation time, wherein
   the analyzer comprises:
   a first memory and a second memory which store the reception signal:

   a time shift filter which applies a time shift process to the reception signal which is stored in the first memory; and
   a control calculator which determines the space propagation time,
   the analyzer determining a proximity between the reception signal which is read from the second memory and a time shifted signal obtained by reading the reception signal from the first memory and applying the time shift process thereto, and
   the analyzer determining a time difference between pulses of the reception signal that are adjacent to each other on the time axis, based on a minute shift time in the time shift process and the proximity, and determines the space propagation time based on the time difference.

2. The gas concentration measurement apparatus according to claim 1, wherein

   the analyzer comprises a sampling period shifter which applies, to the reception signal which is read from the second memory, a sampling period shift process in which a signal is shifted on the time axis in units of a sampling period, and
   the analyzer determines a proximity between the reception signal to which the sampling period shift process is applied, and the time shifted signal.

3. The gas concentration measurement apparatus according to claim 2, wherein
   the minute shift time in the time shift process is shorter than the sampling period.

4. The gas concentration measurement apparatus according to any one of claims 1 to 3, wherein
   the calculator:

   searches for the minute shift time which results in a highest degree of proximity indicated by the proximity; and
   determines the time difference based on the minute shift time resulting in the highest degree of proximity indicated by the proximity.

5. The gas concentration measurement apparatus according to any one of claims 1 to 4, wherein
   the proximity is Euclid distance between the reception signal, which is read from the second memory, and the time shifted signal.

6. The gas concentration measurement apparatus according to any one of claims 1 to 4, wherein the proximity is a correlation value between the reception signal, which is read from the second memory, and the time shifted signal.

7. The gas concentration measurement apparatus according to any one of claims 1 to 6, wherein the time shift filter is an FIR filter.

FIG. 1

RECEPTION
SIGNAL

24

26

0

t=t1

t=t2

t

EP 4 431 935 A1

FIG. 2

100

18

42
TRANSMISSION
ULTRASOUND
TRANSDUCER

40
TRANSMISSION
CIRCUIT

44
RECEPTION
ULTRASOUND
TRANSDUCER

46
RECEPTION
CIRCUIT

48
GAS CONCEN-
TRATION MEA-
SUREMENT
UNIT

FIG. 3

FIG. 4

## INTERNATIONAL SEARCH REPORT

| International application No. |
|---|
| **PCT/JP2022/040655** |

### A. CLASSIFICATION OF SUBJECT MATTER

*G01N 29/024*(2006.01)i
FI:   G01N29/024

According to International Patent Classification (IPC) or to both national classification and IPC

### B. FIELDS SEARCHED

Minimum documentation searched (classification system followed by classification symbols)
G01N29/00-G01N29/52

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2019-66421 A (JAPAN RADIO UEDA CO., LTD.) 25 April 2019 (2019-04-25) | 1-7 |
| A | JP 2013-507624 A (ROBERT BOSCH GMBH) 04 March 2013 (2013-03-04) | 1-7 |
| A | US 2012/0323517 A1 (PADO LAWRENCE E.) 20 December 2012 (2012-12-20) | 1-7 |
| A | WO 2013/119177 A1 (ACOSENSE AB) 15 August 2013 (2013-08-15) | 1-7 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 November 2022** | **06 December 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/040655**

| Patent document cited in search report | | | Publication date (day/month/year) | Patent family member(s) | | | Publication date (day/month/year) |
|---|---|---|---|---|---|---|---|
| JP | 2019-66421 | A | 25 April 2019 | US | 2020/0264136 | A1 | |
| | | | | WO | 2019/069804 | A1 | |
| | | | | EP | 3696540 | A1 | |
| | | | | CN | 111164420 | A | |
| | | | | KR | 10-2020-0066297 | A | |
| JP | 2013-507624 | A | 04 March 2013 | US | 2012/0266676 | A1 | |
| | | | | WO | 2011/045109 | A1 | |
| | | | | DE | 102009049067 | A1 | |
| US | 2012/0323517 | A1 | 20 December 2012 | GB | 2491986 | A | |
| WO | 2013/119177 | A1 | 15 August 2013 | EP | 2626696 | A1 | |

Form PCT/ISA/210 (patent family annex) (January 2015)

14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018100916 A

- JP 2000249691 A